Europäisches Patentamt

European Patent Office

Office européen des brevets

(11) Publication number: **0 408 266 A2**

# EUROPEAN PATENT APPLICATION

(21) Application number: 90307424.3

(22) Date of filing: 06.07.90

(51) Int. Cl.⁵: **G02B 6/36**, G02B 6/44, G02B 6/38

(30) Priority: 11.07.89 GB 8915846

(43) Date of publication of application:
16.01.91 Bulletin 91/03

(84) Designated Contracting States:
AT BE CH DE DK ES FR GB GR IT LI LU NL SE

(71) Applicant: BICC Public Limited Company
Devonshire House Mayfair Place
London W1X 5FH(GB)

Applicant: CORNING LIMITED

Wear Glass Works
Sunderland SR4 6EJ(GB)

(72) Inventor: Pilkington, Ian
1 Maes Celwyn, Coed-y-Glyn
Wrexham, Clwyd LL13 7QG(GB)

(74) Representative: Boon, Graham Anthony et al
Elkington and Fife Beacon House 113
Kingsway
London, WC2B 6PP(GB)

(54) Termination system for optical fibres.

(57) A termination system is provided for use with optical fibre systems installed in tubular passageways using a flow of air or other gas. The system comprises a housing (1) and a module (3) movable between a first position in which the module is enclosed in the housing and a second position in which the module extends from the housing to allow access to the interior of the module. The module is provided with a clamp (13, 80) for terminating an end of at least one duct (10) in which an optical fibre member may be installed, and a connector (23) for terminating an end of at least one further optical fibre member (24′)

FIGURE 1

## TERMINATION SYSTEM FOR OPTICAL FIBRES

This invention relates to a termination system for use with optical fibres, and in particular with optical fibres which have been installed in a tubular passageway using a flow of air or other gas. A method of installing an optical fibre in this way is known, for example, from EP-A-0108590. EP-A-0108590 uses an air flow which is blown along this tubular passageway, and for convenience the method is referred to below as blowing, though it should be mentioned that it has been proposed elsewhere to use sucking instead of, or in addition to, blowing, and the system of the present invention is equally applicable if sucking is used.

After optical fibres have been installed in this fashion, it may be necessary at a later time to regain access to the ends of the tubular passageways, which are typically in the form of flexible plastics tubes. One reason for requiring access is that initially the system may have spare tubes, i.e. more tubes than are required to carry the number of optical fibres which are initially needed. At a later date, as and when additional fibres are needed, these may be installed in the spare tubes, and this requires access to the ends of the tubes. Secondly, it may sometimes be necessary to remove fibres from tubes, for example to allow fresh fibres to be installed, and removal, like installation, is carried out by blowing. This too, requires access to the ends of the tubes.

It is an object of the present invention to provide a termination system which permits the access referred to above, without needing to interfere with the operation of other optical fibres connected through the termination system.

According to the present invention there is provided a termination system for use with optical fibre systems installed in tubular passageways using a flow of air or other gas, comprising a housing, and a module movable between a first position in which the module is enclosed in the housing and a second position in which the module extends from the housing to allow access to the interior of the module, the module being provided with first means for terminating an end of at least one passageway in which an optical fibre member may be installed, and second means for receiving at least one further optical fibre member for connection to the first mentioned optical fibre member.

An embodiment of the invention is shown in the accompanying drawings, in which:

Figure 1 is a perspective view of the embodiment;

Figures 2, 3 and 4 are side views of the embodiment, shown on a smaller scale, and showing successive positions occupied by a module;

Figure 5 is a side view on a larger scale of a module;

Figure 6 is a front view of a module with part of a front panel thereof cut away to reveal the internal structure;

Figure 7 is an exploded perspective view, on a larger scale, showing a detail of the module;

Figure 8a is a side view, partly cut away, showing a fibre connection arrangement, with the components disconnected;

Figure 8b shows the arrangement of Figure 8a, but with the components connected;

Figure 9 shows successive stages in blowing optical fibres into tubes connected to the termination system;

Figure 10 shows an alternative form of the means for terminating an incoming duct.

Figure 11 shows a further embodiment of the invention:

Figure 12 shows a detail thereof on a larger scale and in a different state; and

Figure 13 shows the embodiment of Figures 11 and 12 in its state of use.

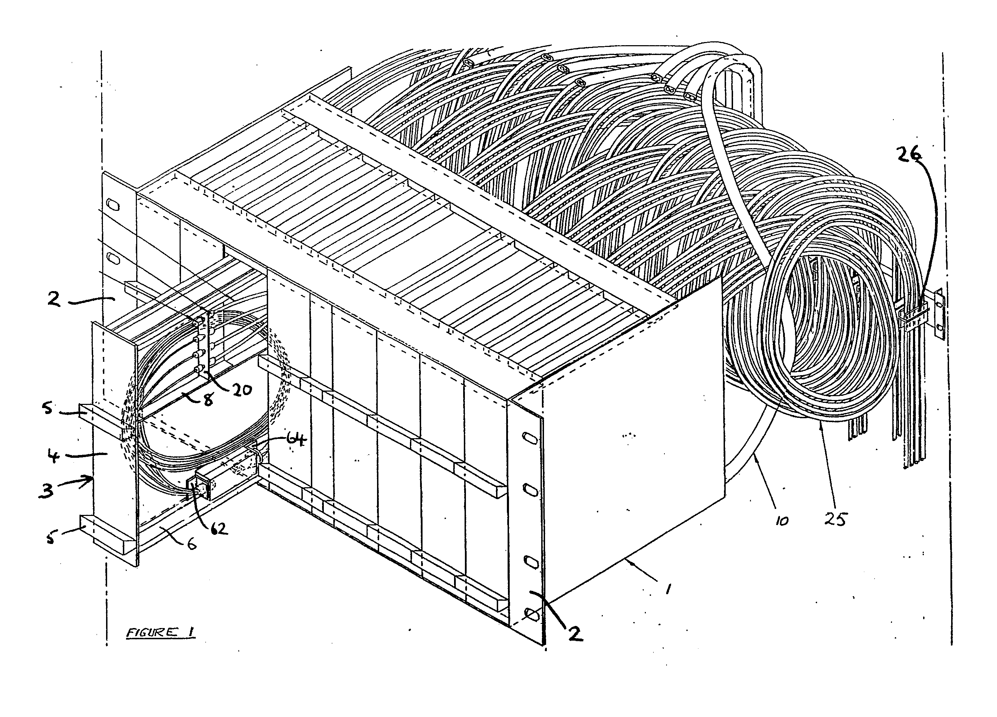

The embodiment shown in Figure 1 comprises a housing 1 which is provided with flanges 2 by means of which it can be mounted in an appropriate location, for example in a cabinet of some kind. The housing 1 houses eight modules 3 divided into two groups of four each. It is to be understood, however, that the number of modules may be more or less than eight and that instead of being arranged in a single row, as illustrated, they may be arranged in two or more rows. For convenience, the ensuing description will refer just to one module, it being understood that what is said applies equally to all the modules.

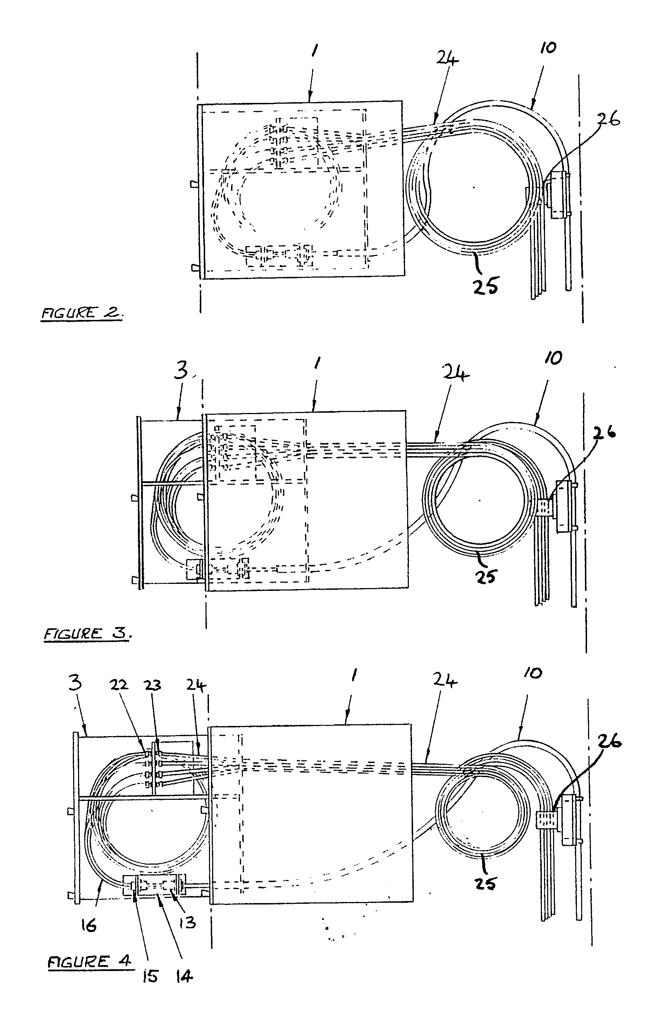

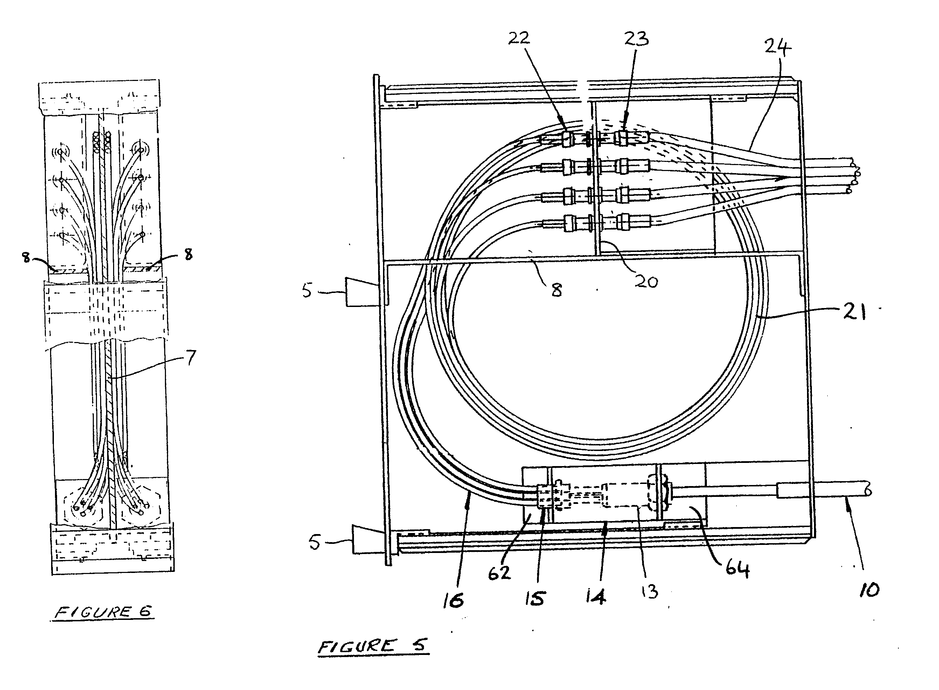

The module 3 is slidably mounted in the cabinet 1 for movement from the closed position shown in Figure 2 to the open position shown in Figure 4. Figure 3 shows a partly open position. In normal use, the module is in the closed position, and the interior of the module and its contents are protected from mechanical damage and undesired interference by personnel, and at least to some extent by environmental hazards such as dust. The module is only brought into the position shown in Figure 4 when it is desired to gain access to the interior thereof.

The module 3 has a front panel 4 provided with handles 5, a bottom panel 6, a centre dividing panel 7 (see Figure 6) and two horizontally extending intermediate plates 8, one on either side of the panel 7. Each plate 8 is narrow enough to leave a gap between it and the dividing panel 7.

A duct 10 enters the rear of the module 3 adjacent the lower end thereof. The duct 10 in this example houses two tubes 11 within each of which one or more optical fibres 12 is installed by blowing. Each of the tubes 11 goes to a respective side of the dividing panel 7, and the arrangement on each side is identical. Accordingly, only the arrangement on one side will be described below. In the illustrated example each tube 11 has installed therein four separate optical fibres 12, each of which comprises an optical fibre proper, preferably substantially of silica, surrounded by at least one coating, and preferably a plurality of coatings, the coating or coatings being such as to protect the optical fibre and render it blowable. Instead of a plurality of individual optical fibres 12, each tube could contain a single optical fibre, or it could contain a plurality of optical fibres held within an outer common sheath to form a multi-fibre unit.

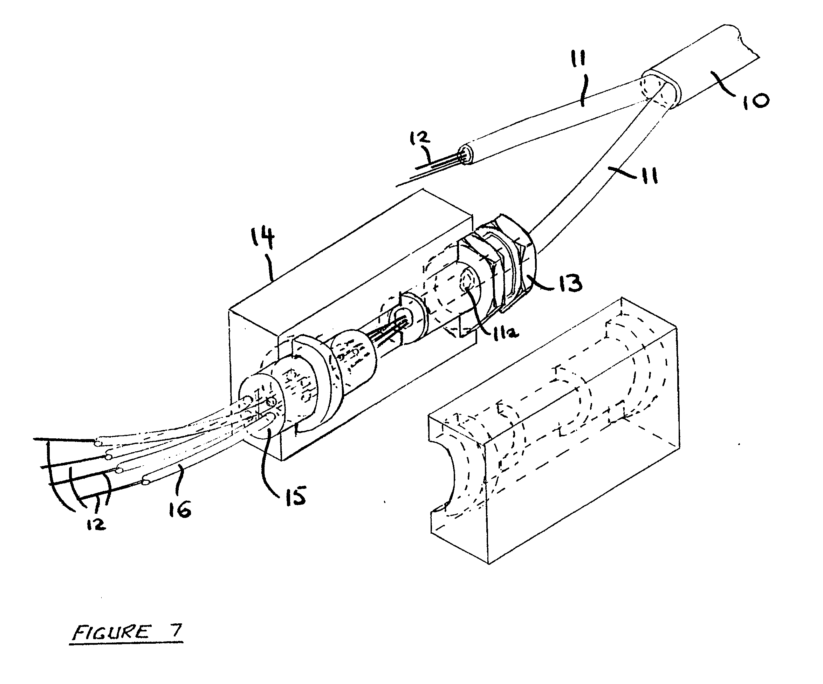

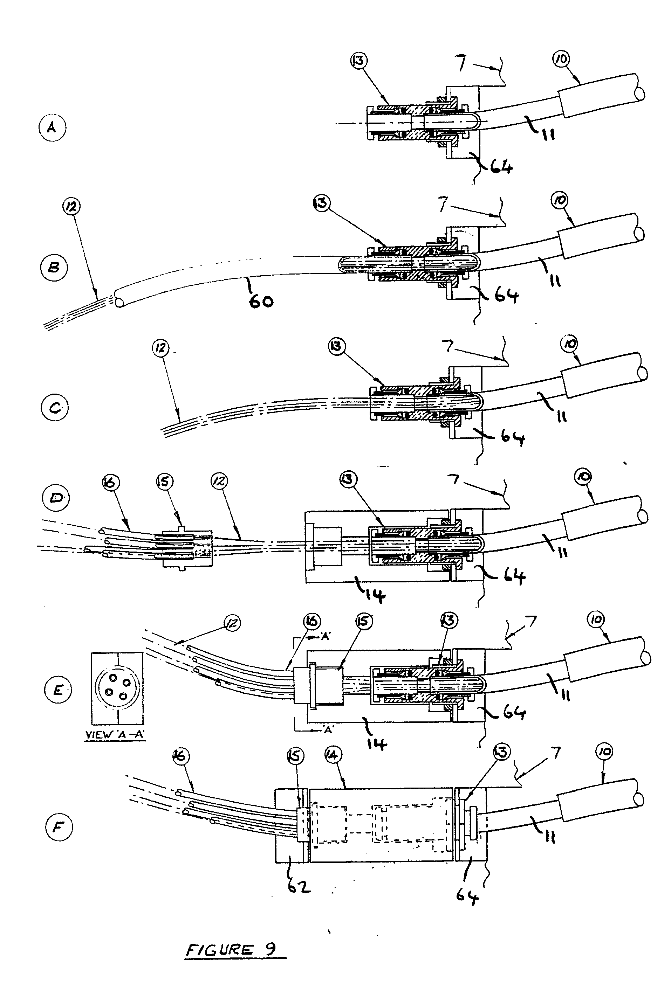

The end portion 11a of the tube 11 is held in a clamp 13 which is mounted in a box 14. The box 14 is secured by angle brackets 62 and 64 to the centre panel 7 and is in two parts, as can be seen in Figure 7, which are normally clamped together by means not shown. A bush 15 is located at the other end of the box 14, the bush being provided with four longitudinally extending apertures each of which receives an end portion of a respective fibre-protection tube 16. The optical fibres emerging from the tube 11 each enter a respective one of the tubes 16, which afford the fibres protection. Further details of the box 14 and associated components appear from the description below with reference to Figure 9.

The tubes 16 with their optical fibres 12 travel along an arcuate path, through the gap between the panel 7 and plate 8, to a connector arrangement mounted on a bulkhead 20, which is itself mounted on the plate 8. (In an alternative embodiment, not shown, the plate 8 is omitted, and guidance for the tubes 16 is provided by a plurality of clips mounted on the panel 7 and spaced around the arcuate path, in which case the bulkhead 20 is secured to the panel 7). The arcuate path extends through approximately one and a half complete revolutions, and the coils of "spare" fibre-containing tubes are indicated by reference numeral 21 in Figure 5. The presence of this "spare" tube makes it possible for any one of the tubes 16 to be connected to any of the four possible positions in the connector arrangement, without placing undue stress on the optical fibre. It also allows for several attempts to be made at terminating the fibres (a short length of fibre is cut off in each attempt), and allows the ends of the fibres to be withdrawn a sufficient distance to reach a station where much operations as may be desired can be carried out on the ends of the fibres. For example, the fibre ends may be withdrawn to a polishing table where their ends are polished before insertion in the connector arrangement.

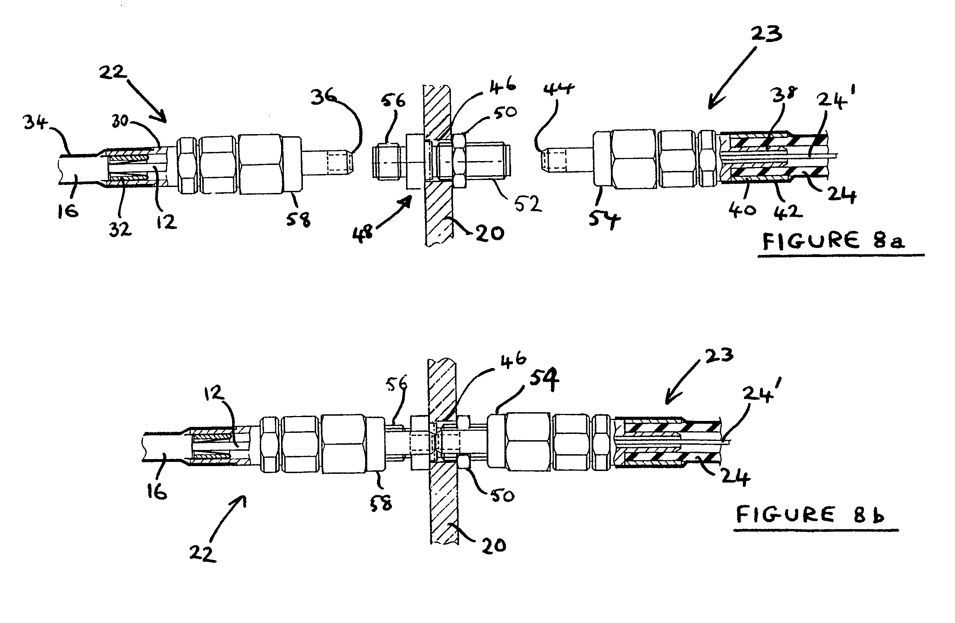

The fibre connection arrangement on the bulkhead 20 comprises four connectors 22 each receiving the end of a respective fibre-protection tube 16, and four corresponding connectors 23, each aligned with a respective one of the connectors 22. The connectors 23 each receive the end of a respective optical fibre connector lead 24 including an optical fibre 24′ tightly or (as shown in the drawings, see Figures 8a and 8b) loosely surrounded by a protective sheath.

The connectors 22 and 23 may be of various types. However, as shown by way of example in Figures 8a and 8b, the connector 22 may comprise a rearwardly extending tubular portion 30 and an annular metal tube 32 which engages the inside of the portion 30 and which also engages the fibre 12 to centre it within the portion 30. A length of heat-shrink film 34 covers the junction between the tube 16 and the connector 22, to provide a neater appearance and a degree of support for the junction. Instead of the film 34, a rubber sleeve may be used. The fibre 12 extends through the connector 22 and terminates at the tip 36 thereof, the end of the fibre being polished to provide a flat surface perpendicular to its length.

The connector 23 is similar to the connector 22 (and could indeed be identical). In this example, however, the connector 23 is designed to receive a lead having a protective sheath of relatively large diameter and wall thickness. The connector 23 comprises a tubular portion 38, an annular metal tube 40 and a length of heat-shrink film 42. The fibre 24′ terminates at the tip 44 of the connector 23.

As shown in Figure 8b, the connector tips 36 and 46 abut one another to provide optical communication between the fibres 12 and 24′. The connectors 22 and 23 are held in alignment with one another in an aperture 46 in the bulkhead 20. This is achieved using a bulkhead fitting 48. The fitting 48 is held in the aperture 46 by a nut 50 which is received on a screw thread 52. The connector 23 is held in place by a nut 54 which is also threaded on the screw thread 52. The fitting 48 carries a further screw thread 56, and the connector 22 is held in place by a nut 58 which is received on the screw thread 56.

The leads 24 travel in a complete loop, indicated by reference numeral 25, before entering a fixedly mounted clamp 26, another portion of which serves to clamp the incoming duct 10. The presence of the loop 25 makes it possible for the module 3 to be pulled out of the housing 1 to the extended position shown in Figures 1 and 4. As can be seen by comparing Figures 2, 3 and 4, the effect of pulling the module out is progressively to reduce the diameter of the loop 25, and the initial size of the loop is so chosen that even when the module is pulled out to its fullest extent the radius of curvature within the loop 25 does not fall below an acceptable minimum value.

The optical fibres 24′ of the leads 24 are connected at their ends remote from the bulkhead 20 to items of optical or opto-electronic equipment (not shown) which may, if desired, also be mounted in the cabinet in which the housing 1 is mounted.

Suppose one of the tubes 11 initially contains no optical fibre, and it is desired subsequently to install fibres therein. The module 3 is then brought into the position of Figure 4, the box 14 disassembled into its two halves, and the end of the tube removed from the clamp 13. Figure 9 shows the successive stages A to F in blowing optical fibres into the tube 11. As Figure 9 shows, the clamp 13 is in the form of a push-fit connector. These are proprietary items, but further details can be found in EP-A-0349344. The clamp is fixed to the angle bracket 64.

In stage A the end of tube 11 held in one end of the clamp 13. In stage B a blowing head (not shown) is connected to the other end of clamp 13 by a flexible blowing tube 60, and a number of fibres 12 (here there are four such fibres) are blown through the tube 60 and into the tube 11 until installed therein, with a trailing portion of each fibre left not installed. In stage C the tube 60 is detached from the clamp 13 and slid off the trailing portions of the fibres 12.

In stage D the trailing fibre portions are threaded through the bush 15 to which the fibre-protection tubes 16 have been attached and one half of the box 14 attached to the clamp 13. In stage E the bush 15 is inserted in the end of the one half of the box 14. In stage F the other half of the box is connected to the one half, and the left hand end of the box connected to the angle bracket 62.

The other ends of the fibre-protection tubes 16 are then fixed to the connectors 22, as already described. Assuming the corresponding tubes 23 and leads 24 are already in place no additional installation steps are needed. If, however, the system is not initially provided with a full complement of these, they can easily be installed. There is, however, no need to install extra ducts 10, as all the ducts needed are installed at the outset.

The procedure described above can easily be modified to blow a fibre or fibres out of a tube 11 instead of installing the fibre or fibres.

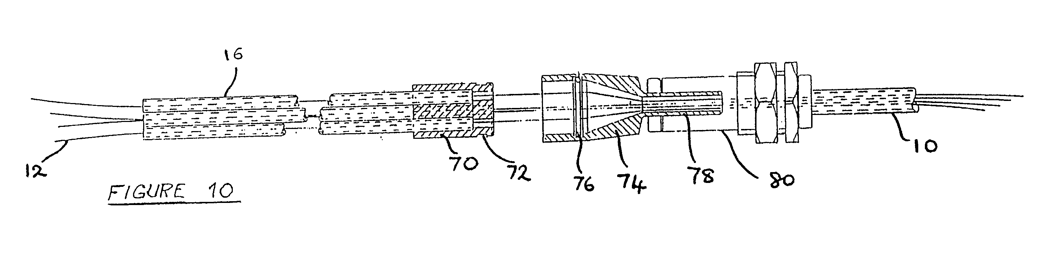

Various modifications can be made to the system described above. One such modification is to omit the box 14 and replace the bush 15 by one which is a push fit. Such an arrangement is shown in Figure 10 of the drawings. Here, each of the tubes 16 is fixedly held in a respective aperture in a bush 70. The bush has an annular recess 72 adjacent its distal end. The bush is a removable push fit in a connector 74. The connector 74 has a reduced diameter portion 78 which is permanently held in a clamp 80. The clamp 80 may be of a conventional type having a toothed collet. Such a device is described, for example in EP-A-0349344, to which attention is directed for further details.

Another modification is to arrange the modules so that each extends horizontally rather than vertically. If the module is then made to receive only a single duct 10 the tubes 16 can be dispensed with since the fibres can then lie in an orderly fashion on the panel 7. This would not be possible if the horizontal module received two ducts 10, since the fibres from the duct on the lower side of the panel 7 would not be restrained from falling down.

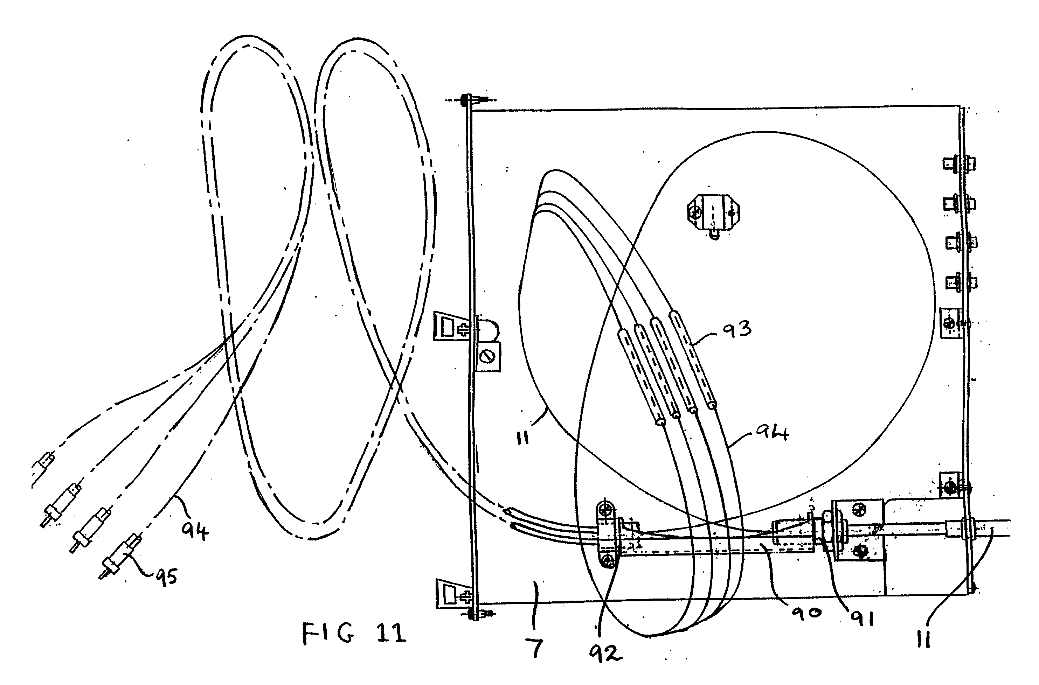

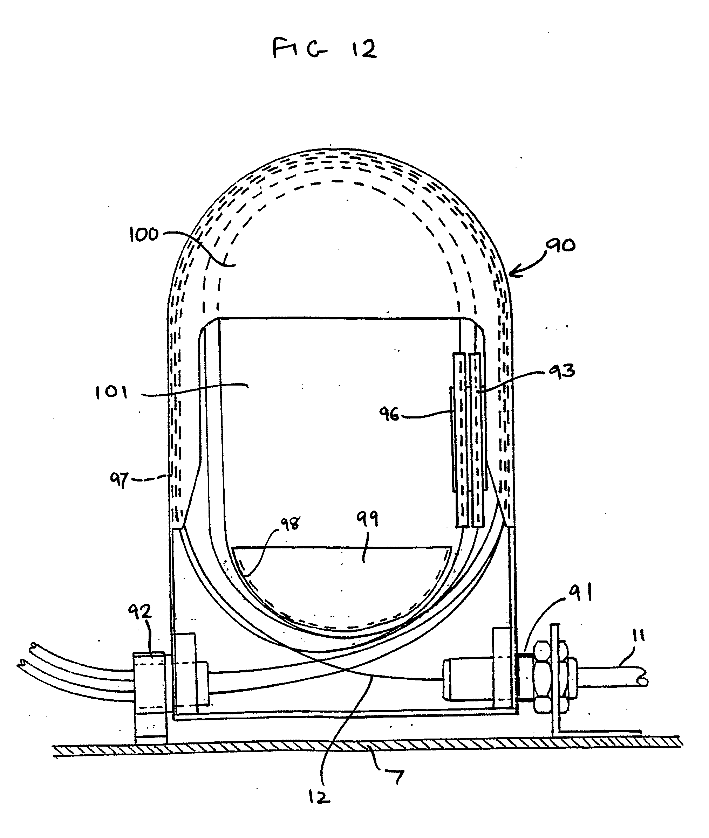

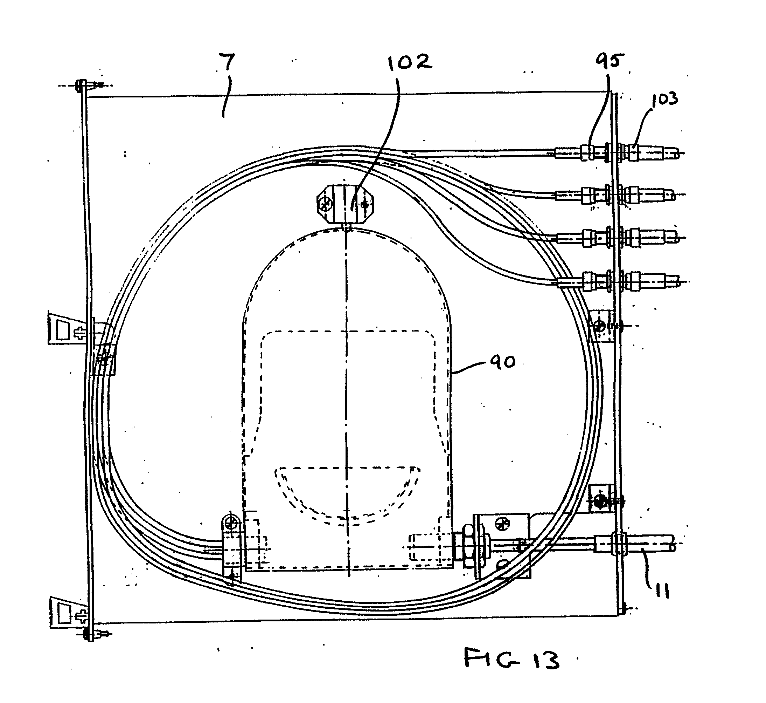

The system of the invention may be modified to allow for fusion or adhesive splicing. One way of doing this is shown in Figures 11 to 13, and this employs a fibre-holding cassette mounted on each module. The cassette, which is denoted by reference numeral 90, is mounted on the module so as to be pivotal between an open position (shown in Figures 11 and 12) in which it extends perpendicular to the plane of the module as defined by the panel 7, and a closed position (shown in Figure 13) in which it extends parallel to the plane of the module.

The cassette is pivotally connected to the panel 7 by hollow pivot blocks 91 and 92. The end of a tube 11 such as is described above in connection with the other embodiments, passes into, and is held within the pivot blocks 91. Optical fibres 12 extend from the end of the tube 11. Typically there would be four such fibres. For ease of illustration only one fibre is shown for most of the fibre length, though all four can be seen in part of Figure 11.

The fibres 11 are each connected by a splice to a respective ruggedised pigtail fibre 94. The splices can be formed by any known means. For example by fusion splicing or splicing using an adhesive, and each is surrounded by a protective sleeve 93. Each pigtail fibre 94 has an optical connector 95 on the distal end thereof. The state which exists immediately after splicing is shown in Figure 11.

An amount of spare fibre 12 is provided between the pivot blocks 91 and the splices, and an amount of spare pigtail fibre 94 is provided on the other side of the splices. This spare fibre is coiled up in the cassette 90 while the cassette is in its open position, as shown in Figure 12. The sleeves 93 are held in grooves defined in a retaining member 96. Figure 12 shows two such grooves. If there are four fibres as suggested above, the other two grooves may conveniently be formed in a second retaining member on the left hand side of the cassette as viewed in Figure 12, i.e. diametrically opposite the illustrated retaining member. The spare fibre lies along a circuit defined around the inside of cassette. For part of its length it runs along the inside of the perimeter wall 97 of the cassette. At the lower end of the cassette (as viewed in Figure 12) it is guided around an arcuate wall 98 of a guide member 99. The cassette is partly closed on the front side (as viewed in Figure 12) by a wall 100 which helps to retain the fibre. On the other side of the cassette there is a wall 101 which extends complete across the cassette.

After the spare fibre has been installed in the cassette, the cassette is pivoted through 90° to its closed position shown in Figure 13, with the wall 100 nearest the panel 7, and the wall 101 uppermost. The fibre therein is thus protected. The cassette is held in the closed position by a closure 102. As shown in Figure 13, the connectors 95 are then each attached to respective further connectors 103 each of which is mounted on the end of a respective optical fibre lead. The connectors 95 and 103 perform a function equivalent to the connectors 22 and 23 shown in the first embodiment. Alternatively, however, the connectors may be omitted, and the pigtail fibres 94 may extend out the module to enable their connectors 95 to be attached directly to an item of optical or optoelectronic equipment.

## Claims

1. A termination system for use with optical fibre systems installed in tubular passageways using a flow of air or other gas, comprising a housing, and a module movable between a first position in which the module is enclosed in the housing and a second position in which the module extends from the housing to allow access to the interior of the module, the module being provided with first means for terminating an end of at least one passageway in which an optical fibre member may be installed, and second means for receiving at least one further optical fibre member for connection to the first mentioned optical fibre member.

2. A system according to claim 1, wherein said second means comprises a pair of connectors, one for terminating an end of said further optical fibre member and one for terminating an end of an optical fibre member installed in said passageway, the pair of connectors providing an optical connection between the fibre member ends.

3. A system according to claim 1 or 2, wherein a fibre-protection tube extends from the first terminating means to said second means.

4. A system according to claim 3, wherein means are provided for constraining the fibre-protection tube to follow an arcuate path.

5. A system according to claim 4, wherein said arcuate path extends through approximately one and a half revolutions.

6. A system according to claim 1 or 2, for use where a plurality of optical fibre members are installed in a passageway, comprising a corresponding plurality of said second terminating means.

7. A system according to any one of claims 3 to 5, for use where a plurality of optical fibre members are installed in a passageway, comprising a corresponding plurality of said terminating means and a corresponding plurality of fibre-protection tubes.

8. A system according to claim 1, wherein said second means comprises means for retaining a spliced connection between an end of the first mentioned optical fibre member and an end of said further optical fibre member.

9. A system according to claim 1, comprising in addition means for enabling a pigtail fibre to be connected between an end of the first mentioned optical fibre member and an end of said further optical fibre member.

10. A system according to claim 8 or 9, comprising a fibre-holding cassette mounted on the module.

11. A system according to claim 10, wherein said cassette is pivotally mounted for movement between an open position in which fibre can be located therein, and a closed position for when the system is in use.

12. A system according to any preceding claim, wherein the module extends predominantly in a vertical plane.

13. A system according to claim 12, wherein the module has a vertically extending panel which divides the module into two, each side of the panel being provided with respective first and second terminating means.

14. A system according to any one of claims 1 to 10, wherein the module extends predominantly in a horizontal plane.

15. A system according to any preceding claim, wherein the module is slidably mounted.

16. A system according to any preceding claim, wherein a plurality of the said modules is provided in a common housing.

FIGURE 1

EP 0 408 266 A2

FIGURE 2.

FIGURE 3.

FIGURE 4.

7

FIGURE 6

FIGURE 5

EP 0 408 266 A2

FIGURE 7

FIGURE 8a

FIGURE 8b

EP 0 408 266 A2

FIGURE 9

FIGURE 10

12

FIG 11

FIG 12

FIG. 13